# NEW EUROPEAN PATENT SPECIFICATION

(11) **EP 1 756 198 B2**
(45) Date of publication and mention of the opposition decision: **23.02.2011**
(45) Mention of the grant of the patent: 19.09.2007
(21) Application number: 05752515.6
(22) Date of filing: 08.06.2005
(51) Int. Cl.: C08G 65/30

(54) **PROCESS OF PREPARING ODOUR-LEAN POLYETHER POLYOL**
VERFAHREN ZUR HERSTELLUNG VON GERUCHSARMEM POLYETHERPOLYOL
PROCEDE D'OBTENTION D'UN POLYOL DE POLYETHER A FAIBLE ODEUR

(30) Priority: 09.06.2004 EP 04253417
(43) Date of publication of application: 28.02.2007
(73) Proprietor: Shell Internationale Research Maatschappij B.V., 2596 HR Den Haag (NL)
(72) Inventor: DUIJGHUISEN, Henricus Petrus Bernardus, NL-1031 CM Amsterdam (NL); ELEVELD, Michiel Barend, NL-1031 CM Amsterdam (NL)
(74) Representative: Matthezing, Robert Maarten
(86) International application number: PCT/EP2005/052644
(87) International publication number: WO 2005/121214

(56) References cited:
- EP-A- 1 338 618
- WO-A-99/47582
- WO-A-03/014190
- WO-A-03/042280
- WO-A1-03/025045
- WO-A1-2004/106408
- WO-A2-01/27185
- US-A1- 20030 073 873

## Description

The present invention relates to a process of preparing odour-lean polyether polyol from crude polyether polyol prepared with the help of double metal cyanide complex catalyst.

Polyether polyols are well known. They are used for many purposes. The polyols can be used for preparing polyurethanes by reacting them with polyisocyanates under appropriate conditions. Polyurethane products that can be made include polyurethane foams, coatings, elastomers, sealants and adhesives.

Conventionally, polyether polyols are prepared by reacting a hydroxyl group-containing initiator containing active hydrogen atoms with alkylene oxide like propylene oxide and ethylene oxide in the presence of a potassium hydroxide catalyst to yield polyether polyols, also referred to as poly(alkylene oxide) polymers.

Nowadays, the potassium hydroxide catalyst can be replaced by double metal cyanide (DMC) complex catalysts. These compounds are well known catalysts for epoxide polymerization, i.e. for polymerizing alkylene oxides. The catalysts are highly active, and give polyether polyols that have low unsaturation compared with similar polyols made using strong basic catalysts like potassium hydroxide.

Polyether polyols prepared with the help of DMC catalysts are known to contain less by-products than similar polyether polyols made using strong basic catalysts. The content of volatile compounds in the polyether polyols prepared with the help of DMC catalysts is lower than the content of these compounds in odour-lean polyether polyols prepared with the help of basic catalysts. However, it was found that polyether polyols prepared with the help of DMC catalysts still have an unacceptable odour. These polyether polyols have to be treated before they can be used in applications where an unpleasant odour is unacceptable. This confirms what was already known of odour-lean polyols namely that the odour is not directly proportional to the amount of volatile compounds present in the polyether polyols.

Suitable methods for obtaining odour-lean polyether polyols have been described in the prior art such as WO-A-99/47582, EP-A-466150, EP-A-864598 and EP-A-417240. These processes all comprise multiple steps.

It has now been found that odour-lean polyether polyols can be prepared in a simple and straightforward way from crude polyether polyols prepared with the help of DMC catalyst. This is very surprising as the low amount of volatile compounds present in the crude polyether polyol prepared with the help of DMC catalyst would suggest that further compounds are difficult to remove.

The present invention relates to a process of preparing odour-lean polyether polyol from crude polyether polyol prepared with the help of double metal cyanide complex catalyst which process comprises stripping the crude polyether polyol in a vessel at a temperature of from 50 to 200 °C, at a ratio of total amount of stripping gas introduced into the vessel to total amount of polyol introduced into the vessel of from 20 to 600 x 10⁻³ m³ of inert gas per kg of polyol and at a residence time of the polyol of from 0.5 to 100 minutes.

The polyether polyols for use in the present invention have been prepared by contacting a hydroxyl group-containing initiator with alkylene oxide in the presence of double metal cyanide (DMC) complex catalyst. The alkylene oxide can in principle be any alkylene oxide. Preferably, the alkylene oxide comprises of from 2 to 10 carbon atoms, preferably of from 2 to 6 carbon atoms, more preferably of from 2 to 4 carbon atoms. Preferred alkylene oxides for use in the present invention are ethylene oxide, propylene oxide, butene oxide, styrene oxide, and the like, and mixtures thereof. Most preferably, the alkylene oxide is propylene oxide and/or ethylene oxide.

A wide range of hydroxyl group-containing initiators can be used for the preparation of polyether polyols for use in the present invention. The hydroxyl group-containing initiator may be water; ethylene glycol; diethylene glycol; triethylene glycol; propylene glycol; dipropylene glycol; tripropylene glycol; 1,2-, 1,3-, and 1,4-butylene glycols; neopentyl glycol; glycerine, trimethylolpropane; triethylolpropane; pentaerythritol, .alpha.-methylglucoside; hydroxy-methyl-, hydroxyethyl-, and hydroxypropylglucosides; sorbitol, mannitol; sucrose; and other commonly used hydroxyl group-containing initiators. Also suitable are monofunctional hydroxyl group-containing initiators such as methanol, ethanol, 1-propanol, 2-propanol, n-butanol, 2-butanol, 2-ethylhexanol, and the like, as well as phenol, catechol, 4,4'-dihydroxybiphenyl, 4,4'-dihydroxydiphenylmethane.

Hydroxyl group-containing initiators which are generally used are compounds containing at least 1 active hydrogen atoms, more preferably at least 2 active hydrogen atoms. Preferred hydroxyl group-containing initiators are organic compounds containing on average at least 1 hydroxyl group, preferably containing on average more than 1 hydroxyl group. More preferably, the hydroxyl group-containing initiators are organic compounds containing of from 2 to 6 hydroxyl groups. Examples of such alcohols are glycol, such as diethylene glycol, dipropylene glycol, glycerol, di- and polyglycerols, pentaerythritol, trimethylolpropane, triethanolamine, sorbitol and mannitol.

Typically, the hydroxyl group-containing initiator is reacted with alkylene oxide at a temperature of from 50 to 150 °C, more particularly from 80 to 130 °C at atmospheric pressure. Higher pressures may also be applied, but the pressure will usually not exceed 20 bar and preferably is from 1 to 5 bar. The process may be carried out in the presence or in the absence of an inert solvent. Suitable inert solvents are cyclohexane, toluene, xylene, diethyl ether, dimethoxyethane and/or chlorinated hydrocarbon (such as methylene chloride, chloroform or 1,2-dichloro-propane). The solvent, if used, is generally used in an amount of from 10 to 30 %wt.

DMC complex catalysts are well known in the art. It has been found that in the present invention in principle any DMC catalyst can be used which is known to be suitable for processes in which alkylene oxide is reacted with a hydroxyl group-containing initiator. The DMC complex catalyst present in the composition of the present invention preferably contains t-butanol ligand.

A process by which the DMC catalyst for use in the present invention can be prepared, has been described in Japanese application 4-145123. The catalyst which is prepared is a bimetallic cyanide complex having tertiary butanol coordinated as organic ligand.

Another process by which the DMC catalyst can be prepared, has been described in PCT patent application PCT/EP01/03498. The process described comprises the steps of (a) combining an aqueous solution of a metal salt with an aqueous solution of a metal cyanide salt and reacting these solutions, wherein at least part of this reaction takes place in the presence of an organic complexing agent, thereby forming a dispersion of a solid DMC complex in an aqueous medium; (b) combining the dispersion obtained in step (a) with a liquid, which is essentially insoluble in water and which is capable of extracting the solid DMC complex formed in step (a) from the aqueous medium, and allowing a two-phase system to be formed consisting of a first aqueous layer and a layer containing the DMC complex and the liquid added; (c) removing the first aqueous layer; and (d) recovering the DMC catalyst from the layer containing the DMC catalyst.

Typically, DMC catalyst present in the composition according to the present invention will have the formula

Zn₂[Co(CN)₆]Cl.nC.mH₂O.pA

wherein C is the ligand used and A is the compound of general formula (I) used. Preferably, C is tert-butyl alcohol and A is methyl tert-butyl ether, di-ethyl ether, di-isopropyl ether, tert-amyl methyl ether or di-butyl ether. Preferably, n is of from 0 to 10, m is of from 0 to 20 and p is of from 0 to 10.

The crude polyether polyol for use in the present invention preferably is polyether polyol as obtained by reacting the initiator with the one or more alkylene oxides. It is preferred that the polyether polyol as obtained is not subjected to any pretreatment before being used in the present invention. The process of the present invention preferably consists only of the stripping process as described herein. Therefore, the polyether polyol preferably still contains the DMC catalyst used for the alkoxylation. The amount of DMC catalyst present is preferably less than 150 parts per million (ppm), more preferably less than 100 ppm, more preferably less than 50 ppm, more preferably at most 25 ppm, more preferably less than 25 ppm, more preferably at most 20 ppm, more preferably less than 20 ppm, based on amount of polyether polyol.

The polyether polyol is stripped with the help of a gas. The gas is inert under the conditions applied during stripping. As mentioned, the ratio of total amount of stripping gas introduced into the vessel to total amount of polyol introduced into the vessel is of from 20 to 600 x 10⁻³ m³ of inert gas per kg of polyol. The volume of the inert gas used in the process determines the efficiency of the gas rather than the molar amount. Preferably, the ratio of total amount of stripping gas introduced into the vessel to total amount of polyol introduced into the vessel is of from 30 to 500 x 10⁻³ m³ of inert gas per kg of polyol. More preferably, the ratio of total amount of stripping gas introduced into the vessel to total amount of polyol introduced into the vessel is of from 40 to 400 x 10⁻³ m³ of inert gas per kg of polyol. Most preferably, the ratio of total amount of stripping gas introduced into the vessel to total amount of polyol introduced into the vessel is of from 50 to 300 x 10⁻³ m³ of inert gas per kg of polyol. The exact amount of stripping gas to be used depends on the odour of the polyether polyol desired. However, in most cases an amount of stripping gas of at most 250 x 10⁻³ m³ of inert gas per kg of polyol suffices while in many cases 200 x 10⁻³ m³ of inert gas per kg of polyol suffices. In most cases, the amount of stripping gas is at least 40 x 10⁻³ m³ and in many cases it is at least 50 x 10⁻³ m³. The exact amount of stripping gas which is introduced depends on the exact circumstances such as the efficiency of dispersing the nitrogen in the liquid polyol, the size of the droplets of the stripping gas, the temperature applied and the time during which the gas is present in the polyether polyol. Preferably the weight ratio of total amount of stripping gas introduced into the vessel to total amount of polyol introduced into the vessel lies in the range from 1 to 5 parts by weight of gas per 100 parts by weight of polyol.

The kind of stripping gas applied depends on the gases available. Generally, the use of nitrogen is preferred over the use of steam as the use of nitrogen makes that the product obtained does not need to be dried.

It will be clear to someone skilled in the art what vessel is to be applied in the process of the present invention. Any vessel generally known to be suitable for stripping, can be used.

The pressure to be applied in the stripping process depends on further circumstances. Preferably, the pressure is at most 1 x 10⁵ N/m². More specifically, the pressure is at most 0.5 x 10⁵ N/m², more specifically at most 0.3 x 10⁵ N/m².

The temperature of the stripping is not critical but depends on the kind of polyether polyol to be stripped, on the amount of stripping gas used and on the reduction of odour desired. Generally, the temperature is of from 60 to 180 °C, more specifically of from 80 to 160 °C, most specifically of from 90 to 150 °C.

As mentioned above, it is very surprising that a simple and straightforward method makes it possible to remove unpleasant odour from a crude polyether polyol which contains only minute amounts of contaminants. The crude polyether polyols which is used in the process of the present invention generally contains at most 100 parts per million by weight (ppm) of volatile organic compounds, more specifically of from 30 to 80 ppm. Although the compounds which cause the bad smell have not yet been determined, it has been observed that the odour-lean polyether polyol obtained by the process according to the present invention generally contains less than 30 ppm of volatile organic compounds, more specifically at most 20 ppm.

The time during which the crude polyether polyol is to be subjected to the stripping process according to the present invention, hereafter also called residence time, is relatively short. However, the exact amount of time required depends on further circumstances such as the amount of stripping gas, the dispersion of the gas in the polyether polyol and the process set-up. Generally, the time required will be of from 0.5 to 100 minutes. More specifically, the time will be at least 1 minutes, more specifically at least 2 minutes. The time required will more specifically be at most 80 minutes.

Usually, polyether polyol is combined with antioxidant directly after manufacture. In the process of the present invention, the antioxidant can be added to the crude polyether polyol and/or to the odour-lean polyether polyol.

The odour-lean polyether polyol can be combined with further additives such as fillers, flame retardants, foam stabilisers (surfactants) and colourants. The flame retardants can be liquid and/or solid flame retardants. Organosilicone surfactants are most conventionally applied as foam stabilisers in polyurethane production. A large variety of such organosilicone surfactants is commercially available. A preferred compound is compound L2100 commercially available from Osi. Usually, such foam stabiliser is used in an amount of up to 5% by weight based on the reaction mixture of polyol reactant and polyisocyanate reactant. The amount in which the usual auxiliaries can be present, can vary widely. Generally, the amount will be of from 0 to 50 parts by weight, based on amount of polyol, more specifically of from 0 to 40 parts by weight.

The present invention is hereinafter exemplified.

### Example 1

A 5 liter stirred reactor was charged with 379 grams of a 1,2-propanediol/propylene oxide adduct having an average molecular weight of 400 (PPG400). Additionally, 32 g was added of solution containing 3% by weight of a double metal cyanide complex catalyst in PPG400. The double metal cyanide complex catalyst was prepared as described in WO-A-01/72418.

The reactor was stripped with nitrogen under vacuum to remove traces of water and heated to 105 °C. A minor amount of propylene oxide was fed to the reactor and the reactor pressure was monitored carefully. Additional propylene oxide was not added until an accelerated pressure drop occurred in the reactor. The pressure drop indicates that the catalyst has become activated. When catalyst activation is verified, sufficient propylene oxide was added gradually over 2 hours to obtain a polyol having an average molecular weight of 4000. The concentration of double metal cyanide complex catalyst in the polyol was 30 ppm. The amount of volatile organic compounds was found to be 50 parts per million (ppm) based on total amount of polyether polyol. The amount is determined with the help of static headspace gas chromatography as described in ASTM method D 4526-96. This was found to be suitable for polyether polyols although the test method describes styrene-acrylonitrile copolymers.

300 ppm of phenolic antioxidant was added to the polyether polyol obtained.

8 kg of the polyether polyol thus obtained was stripped in a 12 liters vessel having a total height of 32 cm and containing a 4-blade axial impeller at 4 cm and at 19 cm. The nitrogen inlet was at about 4 cm height. The stirring was done at 500 rounds per minute and was directed upwards.

When the polyol had been put into the vessel, the polyol was subjected to reduced pressure 3 times and subsequently heated to 140 °C. The mixture was subsequently stripped by blowing nitrogen through the polyether polyol at a flow of 170 liters nitrogen per hour per kg of polyol, while the pressure was maintained at 0.1 x 10⁵ N/m².

The time during which the mixture was stripped, is given Table 1. After the time indicated, the polyol was cooled down to 60 °C and further antioxidant was added (2700 ppm phenolic antioxidant and 1500 ppm of amine antioxidant). The polyol was stirred for 20 minutes and transferred to a vessel under nitrogen. The odour of the polyol obtained was determined by Institut Meurice, Belgium according to set procedures.

Additionally, the odour was determined of polyols as obtained by a stripping process as described in EP-A-1062263. The polyol treated by the process of EP-A-1062263 was prepared with the help of a potassium hydroxide catalyst.

The results obtained are shown in the Table below. The excellent results obtained by the simple method of the present invention, will be clear from this Table.

**Table**

| | stripping according to the present invention (minutes) | | | | stripping as described in EP-A-1062263 |
|---|---|---|---|---|---|
| | 15 | 33 | 45 | 60 | equals 100 min. |
| Odour | Good | Very good | Very good | Very good | Good |

## Claims

1. Process of preparing odour-lean polyether polyol from crude polyether polyol prepared with the help of double metal cyanide complex catalyst which process comprises stripping the crude polyether polyol in a vessel at a temperature of from 50 to 200°C, at a ratio of total amount of stripping gas introduced into the vessel to total amount of polyol introduced into the vessel of from 20 to 600 x 10⁻³ m³ of inert gas per kg of polyol and at a residence time of the polyol of from 0.5 to 100 minutes.

2. Process according to claim 1 in which process the stripping gas is nitrogen.

3. Process according to claim 1 or 2, in which process the residence time of the polyol is of from 20 to 60 minutes.

4. Process according to any one of claims 1 to 3, in which process the pressure is at most 0.5 x 10⁵ N/m².

5. Process according to any one of claims 1 to 4, in which process the crude polyether polyol feed contains of from 30 to 80 parts per million weight by weight (ppm) of volatile organic compounds and the odour-lean polyether polyol contains at most 20 ppm of volatile organic compounds.

## Patentansprüche

1. Verfahren zum Herstellen eines geruchsarmen Poly-etherpolyols aus einem, mit Hilfe eines Doppelmetallcyanidkomplexkatalysators hergestellten, rohen Polyetherpolyol, welches Verfahren das Strippen des :rohen Poly-etherpolyols in einem Gefäß bei einer Temperatur von 50 bis 200°C, bei einem Verhältnis der in das Gefäß eingeführten Gesamtmenge an Stripgas zur in das Gefäß eingeführten Gesamtmenge an Polyol von 20 bis 600x10⁻³ m³ Inertgas pro kg Polyol und bei einer Verweilzeit des Polyols von 0,5 bis 100 Minuten umfasst.

2. Verfahren nach Anspruch 1, bei welchem Verfahren das Stripgas Stickstoff ist.

3. Verfahren nach Anspruch 1 oder 2, bei welchem Verfahren die Verweilzeit des Polyols von 20 bis 60 Minuten beträgt.

4. Verfahren nach einem der Ansprüche 1 bis 3, bei welchem Verfahren der Druck höchstens 0,5x10⁵ N/m² beträgt.

5. Verfahren nach einem der Ansprüche 1 bis 4, bei welchem Verfahren das rohe Polyetherpolyol-Einsatzmaterial von 30 bis 80 Gewichtsteilen pro Million Gewichtsteile (ppm) an flüchtigen organischen Verbindungen umfasst, und der geruchsarme Polyetherpolyol höchstens 20 ppm an flüchtigen organischen Verbindungen umfasst.

## Revendications

1. Procédé de préparation d'un polyol de polyéther faiblement odorant à partir d'un polyol de polyéther brut préparé à l'aide d'un catalyseur à double complexe métal-cyanure, ledit procédé comprenant le lavage du polyol de polyéther brut dans une cuve à une température allant de 50°C à 200 °C, selon un rapport de la quantité totale de gaz de lavage introduit à l'intérieur de la cuve sur la quantité totale de polyol introduit à l'intérieur de la cuve allant de 20 à 600 x 10⁻³ m³ de gaz inerte par kg de polyol et pour un temps de séjour du polyol allant de 0,5 minute à 100 minutes.

2. Procédé selon la revendication 1, dans lequel le gaz de lavage est de l'azote.

3. Procédé selon la revendication 1 ou 2, dans lequel le temps de séjour du polyol est de 20 minutes à 60 minutes.

4. Procédé selon l'une quelconque des revendications 1 à 3, dans lequel la pression est au plus de 0,5 x 10⁵ N/m².

5. Procédé selon l'une quelconque des revendications 1 à 4, dans lequel l'alimentation en polyol de polyéther brut contient de 30 à 80 parties par million en poids sur poids (ppm) de composés organiques volatiles et le polyol de polyéther faiblement odorant contient au plus 20 ppm de composés organiques volatiles.
